# EUROPÄISCHE PATENTSCHRIFT

(11) **EP 0 539 657 B1**
(45) Veröffentlichungstag und Bekanntmachung des Hinweises auf die Patenterteilung: **14.06.1995**
(21) Anmeldenummer: 92110518.5
(22) Anmeldetag: 23.06.1992
(51) Int. Cl.: F02M 35/02, E05C 19/06

(54) **Verschlusselement**
Closure element
Elément de fermeture

(30) Priorität: 31.10.1991 DE 4135954
(43) Veröffentlichungstag der Anmeldung: 05.05.1993
(73) Patentinhaber: FILTERWERK MANN & HUMMEL GMBH, D-71631 Ludwigsburg (DE)
(72) Erfinder: Arnegger, Klaus, W-7140 Ludwigsburg (DE); Leipelt, Rudolf, W-7142 Marbach (DE)
(74) Vertreter: Voth, Gerhard, Dipl.-Ing.

(56) Entgegenhaltungen:
- EP-A- 0 443 649
- DE-A- 3 128 252
- DE-A- 3 429 635

## Beschreibung

Die Erfindung betrifft ein Verschlußelement zum axialtoleranten Befestigen eines Gehäuseteils nach dem Hauptanspruch.

Insbesondere beim Zusammenfügen von Kunststoffteilen oder beim Befestigen von Kunststoffteilen an Metallgrundkörpern besteht die Problematik, daß aufgrund der vergrößerten Fertigungstoleranzen von Kunststoffteilen beim Befestigen ein Längenausgleich erforderlich ist, um keine Verspannungen in dem Kunststoffteil zu verursachen.

Zur Vermeidung solcher Verspannungen wurden schon verschiedene Lösungsansätze entwickelt. So zeigt beispielsweise die DE-OS 37 42 194 einen Verschlußbolzen für die Flansche eines teilbaren Luftfiltergehäuses, wobei dieser Verschlußbolzen an einem Ende radial überstehende Rippen aufweist und durch Drehen des Bolzens dieser über die Rippen arretierbar ist. Der Bolzen ist am anderen Ende mit einer Sicherungscheibe versehen. Zwischen Sicherungsscheibe und Aufnahmebohrung ist eine Druckfeder eingespannt, deren Federkraft die beiden zu verbindenden Gehäuse zusammenhält.

Ein Nachteil dieses Verschlußsystems liegt jedoch darin, daß eine Druckfeder dieser Art bei der Anwendung an Verbrennungsmotoren in Resonanzschwingung geraten kann und damit erhebliche Geräusche verursacht und die Feder sowie die Auflageflächen einem höheren Verschleiß unterliegen.

Der Erfindung liegt die Aufgabe zugrunde, die genannten Nachteile zu vermeiden und ein Verschlußelement zu schaffen, welches unempfindlich gegen äußere Schwingungseinwirkung ist und einfach sowie platzsparend aufgebaut ist.

Diese Aufgabe wird durch die Merkmale des Anspruchs 1 gelöst.

Ein wesentlicher Vorteil dieses Verschlußelements ist die einfache Bauart. Sowohl an dem Grundkörper als auch an dem Gehäuseteil sind keine besonderen Vorrichtungen oder Aufnahmen erforderlich. Das Gleitelement ist ein einfaches quaderförmiges Bauteil, welches eine Gewindebohrung und ein Befestigungselement für die Feder aufweist. Am Gehäuseteil ist lediglich eine Bohrung für die Befestigungsschraube erforderlich. Die einfache Gestaltung der zusammenzufügenden Kunststoffteile ist ein wesentlicher Vorteil und erleichtert den Herstellungsprozeß.

Gemäß einer Weiterbildung der Erfindung ist das Gleitelement als Kunststoff- oder Metallteil ausgebildet. Insbesondere bei Verwendung von Kunststoff ist zunächst ein Gewinde in dem Gleitelement nicht erforderlich. Hier kann durch die Verwendung einer selbstschneidenden Gewindeschraube das Gewinde bei der Montage hergestellt werden.

Die Feder ist bevorzugt in Form einer Bügelfeder ausgestaltet. Diese hat den Vorteil, daß sie schwingungsunempfindlich und besonders einfach herstellbar ist.

Gemäß einer Weiterbildung der Erfindung kann die Feder aus einem Federstahlflachband hergestellt sein. Die Enden dieser Feder sind abgekröpft und greifen in Stützflächen des Gleitelements bzw. des Grundkörpers ein. Besondere Aufhängevorrichtungen oder ösen sind nicht erforderlich.

Eine Alternative zu der Flachbandfeder stellt eine Bügelfeder aus Federdraht dar. Zur Befestigung dieser Bügelfeder an dem Gleitelement ist eine Befestigungsbohrung vorgesehen, in die die Bügelfeder eingehängt wird. Die Befestigung der Bügelfeder an dem Grundkörper erfolgt durch eine einfache Stützfläche.

Die Erfindung wird nachfolgend anhand von Ausführungsbeispielen näher erläutert. Es zeigt
- Figur 1: die Befestigung eines Gehäuseteils an einem Grundkörper in einer Schnittdarstellung,
- Figur 2: eine schematische Darstellung des Einfügens eines Gleitelements in die Gleitführung eines Grundkörpers,
- Figur 3: eine Draufsicht auf ein Gleitelement gemäß Figur 1,
- Figur 4: eine Ausführungsvariante der in Figur 1 gezeigten Befestigungsart,
- Figur 5: eine Draufsicht auf die in Figur 4 gezeigte Ausführungsvariante.

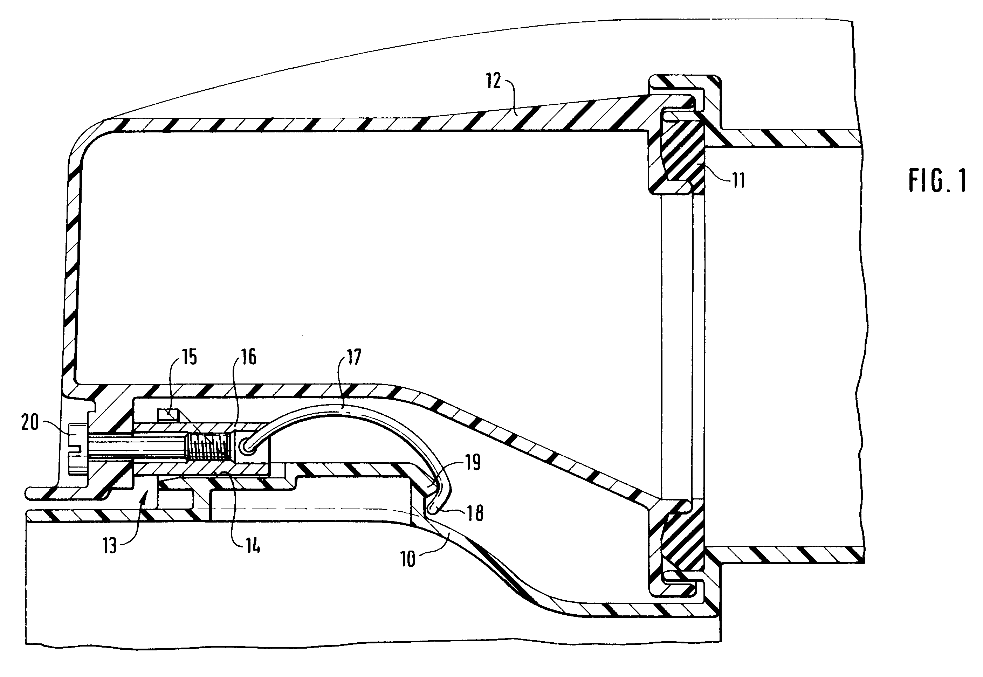

In Figur 1 ist ein Grundkörper 10 dargestellt. Dieser ist hier nur schematisch gezeigt. Die Funktion des Grundkörpers ist für die Darstellung des Ausführungsbeispiels unerheblich.

An dem Grundkörper ist ein Dichtungsring 11 befestigt. Auf diesem Dichtungsring befindet sich ein Gehäuseteil 12. Sowohl das Gehäuseteil 12 als auch der Grundkörper 10 bestehen aus einem thermoplastischen Kunststoff. Wird das Gehäuseteil 12 an dem Grundkörper 10 befestigt, so ist für einen Toleranzausgleich zu sorgen, da die Toleranzen der einzelnen Teile bei einer festen Verbindung dieser beiden Teile miteinander innere Spannungen in den Kunststoffteilen erzeugen und unter Umständen bleibende Verformungen hervorrufen.

Wie die Figur 1 zeigt, ist deshalb in dem Befestigungsbereich 13 zwischen Grundkörper und Gehäuseteil keine unmittelbare Kontaktfläche vorgesehen. An dem Grundkörper 10 ist statt dessen eine Gleitfläche 14 angeordnet. Oberhalb dieser Gleitfläche befindet sich ein Führungselement 15. Zwischen Gleitfläche 14 und Führungselement 15 ist ein Gleitelement 16 angeordnet. Dieses Gleitelement ist ein quaderförmiges Teil, welches an seinem dem Gehäuseteil 12 zugewandten Ende eine Gewindebohrung aufweist und an seinem gegenüberliegenden Ende eine Bohrung für die Aufnahme einer Bügelfeder 17. Diese Bügelfeder 17 ist einerseits in die Bohrung des Gleitelements 16 eingerastet und andererseits an ihrem abgekröpften Ende 18 über eine Stütznase 19 des Grundkörpers 10 gespannt.

In dem Gehäuseteil 12 befindet sich am Befestigungsbereich 13 eine Bohrung, in welche eine Schraube 20 eingesteckt ist. Der Bohrungsdurchmesser ist in Verbindung mit dem Gewindedurchmesser der Schraube 20 so gestaltet, daß die Schraube 20 verliersicher in dem Gehäuseteil verbleibt, wenn die Schraube aus dem Führungselement 15 herausgeschraubt ist. Über diese Schraube 20 erfolgt die Befestigung des Gehäuseteils 12. Es ist ersichtlich, daß durch die Schraubwirkung das Gleitelement 16 an das Gehäuseteil 12 unter Überwindung der Federspannung der Bügelfeder 17 herangezogen wird. Die Feder 17 bewirkt, daß auf das Gehäuseteil 12 eine konstante Kraft ausgeübt wird, wodurch dieses ohne die Erzeugung von Spannungen oder übermäßigen Verformungen an dem Grundkörper 10 befestigt werden kann.

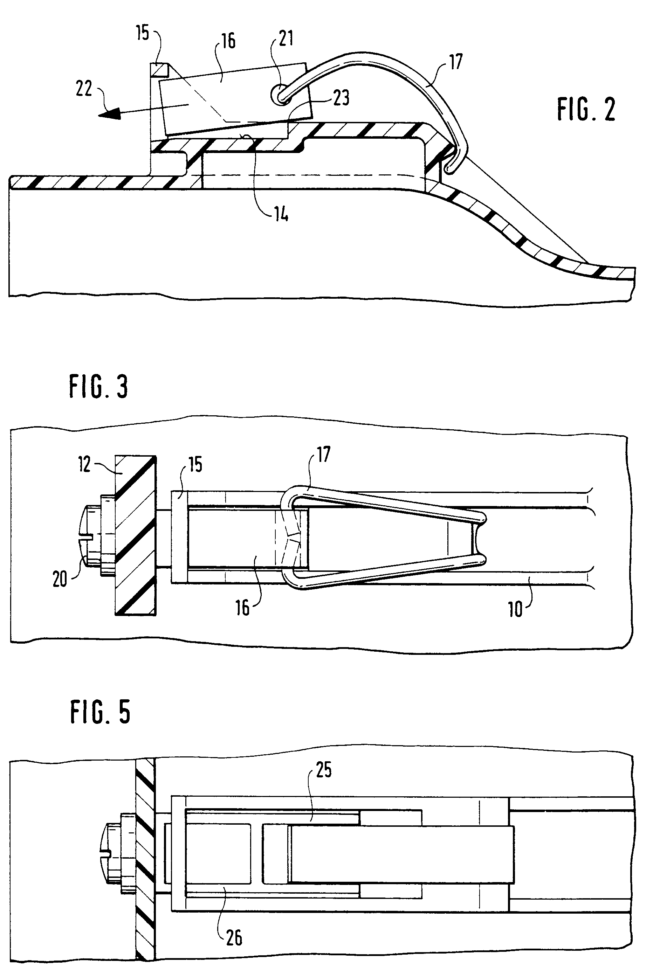

Figur 2 zeigt die Montage des Gleitelements 16. Zunächst wird in Befestigungsbohrungen 21 des Gleitelements 16 die Bügelfeder 17 eingehängt und anschließend das Gleitelement 16 mit der eingehängten Bügelfeder auf die Gleitfläche 14 in Richtung des Pfeiles 22 aufgeschoben, bis das Gleitelement an dem Vorsprung 23 der Gleitfläche 14 einrastet. Aufgrund des Führungselements 15 bleibt das Gleitelement 16 in der eingerasteten Lage fixiert, wobei die axiale Beweglichkeit gewährleistet ist.

Die in Figur 3 gezeigte Draufsicht verdeutlicht den Aufbau der Bügelfeder 17. Ein Vorteil dieser hier gezeigten Bügelfeder besteht darin, daß sie leicht montiert werden kann. Ein weiterer Vorteil ist darin zu sehen, daß diese bei Vibrationen nicht zu Resonanzschwingungen neigt.

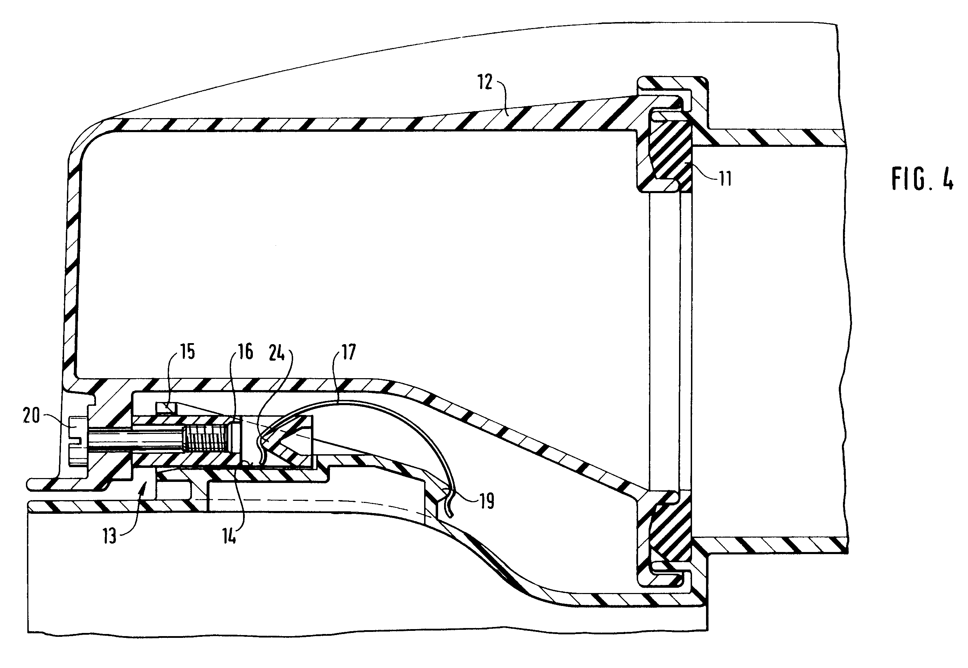

Figur 4 zeigt eine Variante des Gleitelements 16. Dieses Gleitelement ist hier nicht mit Befestigungsbohrungen für die Bügelfeder 17 versehen sondern mit einer Einhängnase 24. Diese Nase ist, wie auch in Figur 5 zu erkennen ist, durch seitliche Wände 25, 26 begrenzt. Die Bügelfeder 17 ist in diesem Fall aus einem Federstahlband hergestellt und an beiden Enden abgekröpft. Dieses Federstahlband kann, nachdem das Gleitelement 16 auf die Gleitfläche 14 aufgeschoben ist, über die Einhängenase 24 eingehängt werden. Die gegenüberliegende Seite der Bügelfeder wird in üblicher Weise an einer Stütznase 19 des Grundkörpers 10 eingehängt.

Eine Bügelfeder aus Federstahlband ist besonders einfach herzustellen und ebenfalls gegen äußere Vibrationen unempfindlich.

### Bezugszeichenliste

- 10: Grundkörper
- 11: Dichtungsring
- 12: Gehäuseteil
- 13: Befestigungsbereich
- 14: Gleitfläche
- 15: Führungselement
- 16: Gleitelement
- 17: Bügelfeder
- 18: Ende
- 19: Stütznase
- 20: Schraube
- 21: Befestigungsbohrung
- 22: Pfeil
- 23: Vorsprung
- 24: Einhängenase
- 25: Wand
- 26: Wand

## Patentansprüche

1. Verschlußelement zum axialtoleranten Befestigen eines Gehäuseteils (12) an einem Grundkörper (10) bestehend aus einem am Grundkörper (10) axial verschiebbar gelagerten Gleitelement (16), einer zwischen Gleitelement und Grundkörper angeordneten Feder (17), einer am Gehauseteil (12) angeordneten Bohrung zur Aufnahme einer Befestigungsschraube (20), wobei die Befestigungsschraube (20) in das Gleitelement (16) einschraubbar ist und die Verbindung zwischen Gehäuseteil (12) und Grundkörper (10) herstellt.

2. Verschlußelement nach Anspruch 1, wobei das Gleitelement (16) ein Kunststoff- oder Metallteil ist, das in einer Gleitführung angeordnet ist, und die Feder (17) in Form einer Bügelfeder ausgestaltet ist.

3. Verschlußelement nach Anspruch 1 oder 2, wobei die Bügelfeder (17) aus einem Flachband besteht, welches an den Enden abgekröpft ist und auf Stützflächen (19, 24) des Gleitelements und des Grundkörpers eingehängt ist.

4. Verschlußelenent nach einem der vorhergehenden Ansprüche, wobei die Bügelfeder (17) aus einem Federdraht besteht und das Gleitelement eine Befestigungsbohrung (21) aufweist, in welche die Bügelfeder (17) eingehängt ist.

## Claims

1. Securing means for the axially tolerant securement of a housing component (12) on a basic body member (10), comprising a slide element (16) which is mounted on the basic body member (10) in an axially displaceable manner, a spring (17) which is disposed between the slide element and the basic body member, and a bore which is provided in the housing component (12) for receiving a screw fastener (20), wherein the screw fastener (20) can be screwed into the slide element (16) and establishes the connection between the housing component (12) and the basic body member (10).

2. Securing means according to claim 1, wherein the slide element (16) is a plastics material or metal component disposed in a sliding guide, and the spring (17) is configured in the form of a fastening spring.

3. Securing means according to claim 1 or 2, wherein the fastening spring (17) comprises a flat strip, which is bent at its ends and retained on supporting surfaces (19, 24) of the slide element and basic body member.

4. Securing means according to one of the preceding claims, wherein the fastening spring (17) comprises a spring wire, and the slide element has a mounting bore (21), in which the fastening spring (17) is retained.

## Revendications

1. Elément de fermeture pour fixation avec tolérance d'une pièce de boîtier (12) sur un corps de base (10) constitué d'un corps glissant (16) logé en coulissement axial sur le corps de base (10) d'un ressort (17) placé entre l'élément glissant et le corps de base, d'un alésage sur la pièce de boîtier (12) pour recevoir une vis de fixation (20), la vis de fixation (20) est vissable dans l'élément glissant (16) et réalise la liaison entre la pièce de boîtier (12) et le corps de base (10).

2. Elément de fermeture selon la revendication 1, dans lequel l'élément glissant (16) est une pièce en matière plastique ou une pièce en métal, qui est logée dans un guidage glissant, et le ressort (17) est sous la forme d'un ressort à étrier.

3. Elément de fermeture selon la revendication 1 ou 2, dans lequel le ressort à étrier (17) est sous la forme d'une lame plane, qui est recourbée aux extrémités et est accroché aux surfaces d'appui (19, 24) de l'élément glissant et du corps de base.

4. Elément de fermeture selon l'une des revendications précédentes, dans lequel le ressort à étrier (17) est constitué d'un fil élastique et l'élément glissant présente un alésage de fixation (21) dans lequel s'accroche le ressort à étrier (17).
